# FASCICULE DE BREVET EUROPEEN

(11) **EP 1 384 753 B1**
(45) Date de publication et mention de la délivrance du brevet: **07.01.2009**
(21) Numéro de dépôt: 03291772.6
(22) Date de dépôt: 17.07.2003
(51) Int. Cl.: C09D 127/18, C08K 3/22, C08K 3/38, H01B 3/44, B41M 5/26, C08L 79/08

(54) **Matériau à base de polymère fluoré, sous forme de ruban ou de vernis, apte au marquage par laser**
Laser-markierbares Band oder Lackmaterial auf der Basis von fluoriertem Polymer
Laser-markable ribbon or varnish material based on fluorinated polymer

(30) Priorité: 22.07.2002 FR 0209282
(43) Date de publication de la demande: 28.01.2004
(73) Titulaire: COMPAGNIE PLASTIC OMNIUM, 69007 Lyon (FR)
(72) Inventeur: Yeung, Chor Keung, 52600 Chaudenay (FR)
(74) Mandataire: Remy, Vincent Noel Paul

(56) Documents cités:
- EP-A- 0 066 298
- EP-A- 0 367 629
- WO-A-00/52348
- WO-A-02/41325
- US-A- 5 320 789
- US-B1- 6 245 836

## Description

L'invention concerne un matériau de revêtement, sous forme de ruban ou de vernis, apte au marquage par laser, à base de polymère fluoré.

On sait que les polymères totalement fluorés, ou quasi-totalement fluorés, tels que le poly(tétrafluoroéthylène) ou PTFE, ou encore les copolymères fluorés éthylène-propylène, sont des matériaux chimiquement inertes, ayant de bonnes propriétés d'isolation électrique et capables de supporter en continu de hautes températures.

De tels polymères fluorés sont utilisés dans la fabrication de revêtements pour câbles électriques, notamment sous forme de rubans de revêtement de câbles de structures complexes.

Pour le repérage des câbles, il est souhaitable de les marquer avec un faisceau laser, de façon à faire apparaître à la surface du câble des inscriptions d'identification sous la forme de marques indélébiles de contraste convenable.

Cependant, les polymères fluorés ne sont pas aptes au marquage par laser, car ils ne permettent d'obtenir que des marques peu visibles.

I1 est connu d'incorporer aux polymères fluorés des additifs qui changent de couleur après irradiation par un faisceau laser, de sorte que des marques visibles apparaissent dans les zones irradiées, par contraste avec les zones non irradiées. On utilise par exemple le dioxyde de titane dont la couleur vire du blanc au gris dans les zones d'impact d'un laser UV (émettant dans l'ultra-violet). Toutefois, le contraste obtenu ne dépasse pas 60 % environ et n'est pas stable dans le temps : le marquage vieillit et le contraste peut descendre en dessous de 40 %.

On rappelle que le contraste est le pourcentage défini par (1-Lm/LF) x 100, où Lm et LF sont respectivement la luminance du marquage et la luminance du fond.

On a également proposé d'ajouter aux polymères fluorés certains additifs organiques sensibles au laser UV, qui permettent d'obtenir des marquages plus durables. Toutefois, la mise en oeuvre des polymères fluorés tels que le PTFE nécessite une phase de frittage à une température de l'ordre de 360 °C, et les additifs organiques ne résistent généralement pas à des températures supérieures à 300 °C.

On a maintenant découvert que l'incorporation de certains polyimides dans les polymères fluorés permet d'améliorer de façon importante l'aptitude au marquage par laser UV, avec un contraste élevé. La demande de brevet EP 0 367 629 préconise l'addition de divers polymères aromatiques conjugués tels que des polycétones, des polyéthercétones, des polysulfones, des polyéthersulfones, des polyimides, des poly(sulfures de phénylène) et des polyétherimides, comme additifs permettant d'améliorer le marquage par laser. Toutefois, aucune indication sur la structure des polyimides éventuellement utilisables n'est fournie, et aucun exemple d'utilisation de tels polyimides n'est donné. En fait, comme cela est montré dans la partie expérimentale ci-après, de nombreux polyimides et polyétherimides connus ne sont pas aptes au marquage par laser.

On a maintenant découvert que certains polyimides de structure particulière présentent un grand intérêt dans l'obtention de revêtements marquables par laser UV avec un contraste élevé.

L'invention a donc pour objet un matériau de revêtement, sous forme de ruban ou de vernis, apte au marquage par laser, à base de polymère fluoré, contenant comme additif de 0,5 % à 5 % en poids d'au moins un polyimide comprenant des motifs répétitifs qui contiennent au moins un groupement Ar-X-Ar', dans lequel Ar et Ar' représentent indépendamment un groupe aromatique monovalent ou divalent éventuellement substitué, et X représente un groupement -CO- ou -S-, ledit polyimide étant exempt d'hétéroatomes ou groupements hétéroatomiques autres que -S- et autres que les groupements imides.

Dans la présente demande, on appelle groupes aromatiques ou encore groupes aryles des groupes possédant un ou plusieurs noyaux benzéniques, naphtaléniques ou anthracéniques.

Parmi ces matériaux, on citera notamment ceux pour lesquels ledit groupement -CO- est présent dans un groupe divalent ou tétravalent de formule I:

Ar-CO-Ar' (I)

Ar et Ar' représentant chacun indépendamment un groupement aryle monovalent ou divalent, éventuellement substitué ; et en particulier ceux pour lesquels ledit groupement -CO- est présent dans un groupe aromatique divalent ou tétravalent de formule II ou III: 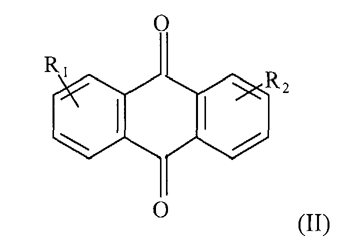 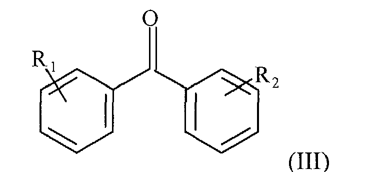 R₁ et R₂ représentant indépendamment H ou un ou plusieurs substituants.

Parmi les polyimides utilisables selon l'invention, on citera également ceux contenant un groupement -S- présent dans un groupe aromatique divalent ou tétravalent de formule IV: 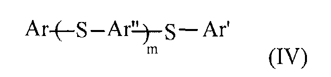 dans laquelle Ar et Ar' représentent chacun un groupement aryle monovalent ou divalent, Ar" est un groupement arylène, m est le nombre zéro ou un nombre entier égal à 1 ou 2, et les groupements Ar, Ar' et Ar" sont éventuellement substitués ; parmi ces composés, on citera ceux dans lesquels le groupement -S- est présent dans un groupe aromatique divalent ou tétravalent de formule (V) : 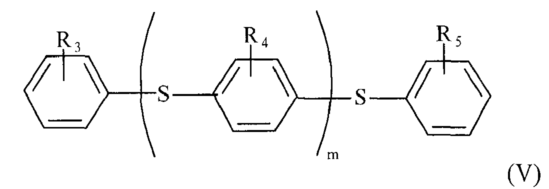 dans laquelle R₃, R₄ et R₅ représentent indépendamment H ou un ou plusieurs substituants, et m est un nombre égal à 0, 1 ou 2,
ou de formule VI : 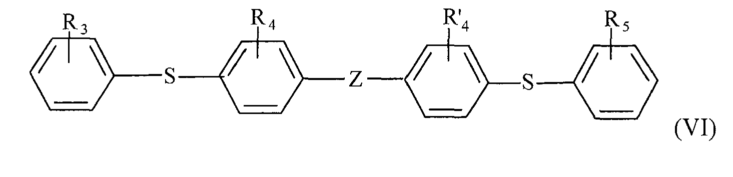 dans laquelle R₃, R₄ et R₅ sont définis comme ci-dessus, R'₄ représente H ou un ou plusieurs substituants, et Z est une liaison covalente ou un groupe -(CH₂)-, -CH(CH₃)- ou -C(CH₃)₂-.

Les polyimides utilisables dans le matériau de revêtement de l'invention sont notamment ceux qui contiennent des motifs de formule VII : 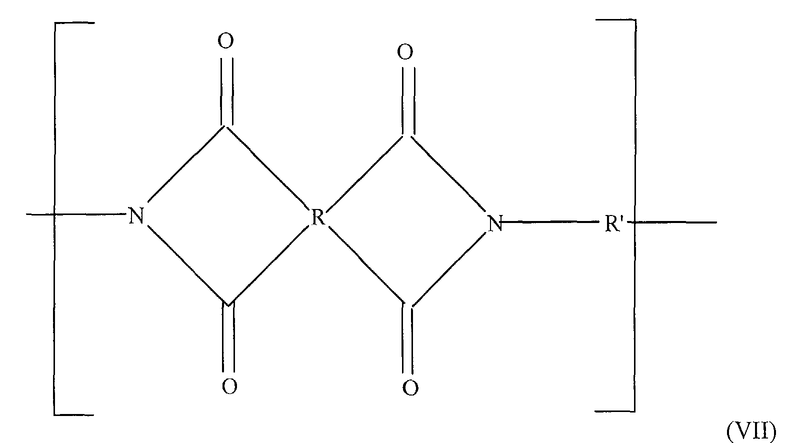 dans laquelle R représente un groupe aromatique tétravalent éventuellement substitué et R' est un groupe aromatique divalent éventuellement substitué, et dans laquelle l'un au moins des groupes R et R' contient au moins un groupement Ar-X-Ar' tel que défini précédemment.

Parmi les polyimides utilisables, on citera notamment ceux pour lesquels R représente au moins un des groupements tétravalents de formules IIa, IIIa, Va ou VIa: 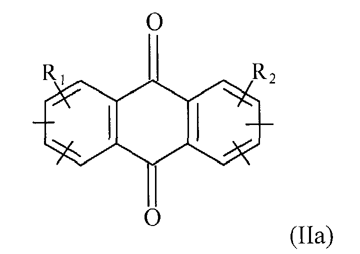 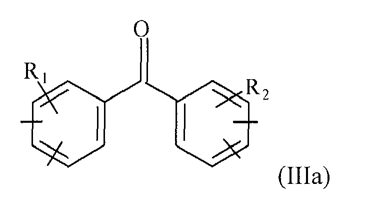 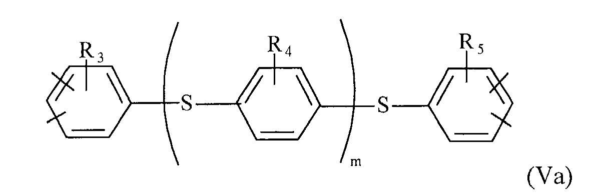 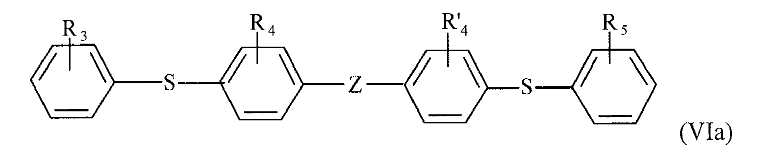 R₁, R₂, R₃, R₄, R₅ et R'₄ représentant indépendamment H ou 1 ou plusieurs substituants Z représentant une liaison covalente, -CH₂-, -CH(CH₃)- ou -C(CH₃)₂-, et les valences libres sont en position ortho l'une par rapport à l'autre ;
ainsi que ceux pour lesquels R' représente au moins un des groupements divalents de formule IIb, IIIb, Vb ou VIb : 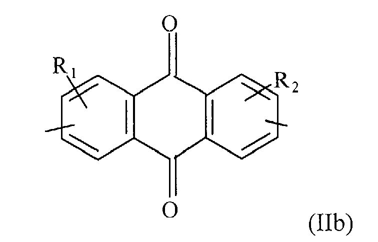 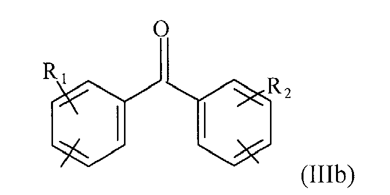 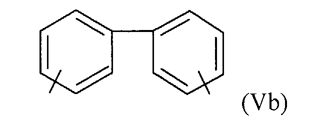 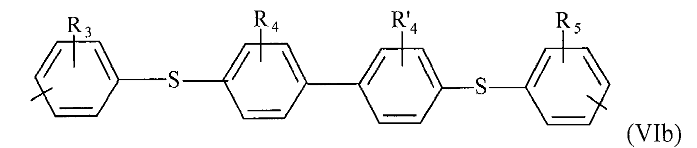 R₁, R₂, R₃, R₄, R₅, R'₄ et Z étant définis comme précédemment.

On peut utiliser notamment les polyimides de formule VII dans lesquels soit les groupes R, soit les groupes R', contiennent des groupements Ar-X-Ar' tels que définis dans l'une quelconque des revendications 1 à 4, et les autres groupes (soit R', soit R, selon le cas), n'en contiennent pas. Ces autres groupes sont notamment des groupes aromatiques divalents (cas de R') ou tétravalents (cas de R) contenant des groupements cycliques dérivés du benzène ou du naphtalène, éventuellement substitués par des halogènes, des alkyles inférieurs et des halogénoalkyles inférieurs. Lesdits autres groupes ont par exemple l'une au moins des structures suivantes : 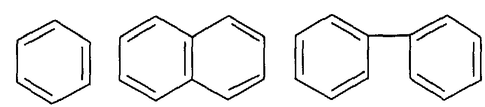 et 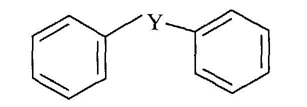 dans lesquelles Y représente -CH₂-, -CH(CH₃)-, -C(CH₃)₂- et les cycles sont éventuellement substitués par des halogènes, des alkyles inférieurs ou des halogénoalkyles inférieurs. Bien entendu, lorsqu'il s'agit du groupement R de la formule VII, les structures correspondantes sont tétravalentes, de façon analogue aux structures IIa, IIIa, Va et VIa, indiquées précédemment et lorsqu'il s'agit du groupement R' de la formule VII, ces structures sont divalentes, de façon analogue à celle indiquée précédemment pour les formules IIb, IIIb, Vb ou VIb.

D'une façon générale, les substituants éventuellement présents sur les groupes aryles des polyimides utilisés selon l'invention sont notamment des halogènes (en particulier fluor ou chlore), des alkyles inférieurs (par exemple méthyle, éthyle, n-propyle ou isopropyle), ou des halogénoalkyles inférieurs, en particulier des fluoroalkyles, y compris des perfluoroalkyles, par exemple le groupement -CF₃.

Dans la présente demande, un alkyle inférieur désigne un alkyle ayant de 1 à 5 atomes de carbone, et en particulier de 1 à 3 atomes de carbone.

Bien entendu, dans les polyimides de formule VII, les groupements R et R' (ou une partie des groupements R et une partie des groupements R') peuvent tous deux contenir des groupes Ar-X-Ar'.

Les polyimides utilisables selon l'invention sont des produits connus ou peuvent être préparés par des procédés connus consistant principalement à faire réagir un dianhydride intramoléculaire dérivé d'un acide aromatique tétracarboxylique ayant pour formule R(COOH)₄ avec une diamine de formule R'(NH₂)₂ ou un diisocyanate correspondant ; voir par exemple les procédés décrits dans le brevet US 5 066 760 et le brevet US 3 847 867.

On peut utiliser par exemple le polyimide P84 de la firme HP Polymer, qui correspond à un polymère de formule VII avec R représentant un groupement de type IIIa (avec R₁ et R₂ représentant H), et R' représente le groupement :

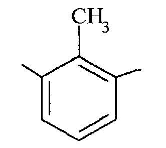

On peut également utiliser le polyimide P84 HT de la même firme, qui est un copolymère répondant à la formule VII avec des groupes R tétravalents de formule IIIa (avec R₁ = R₂ = H), des groupes R tétravalents de formule 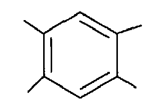 et le groupe R' répondant à la formule

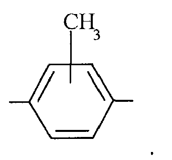

Pour incorporer le polyimide dans le polymère fluoré, on mélange le polyimide sous forme de poudre ayant par exemple des dimensions de particules de 2 à 12 µm au polymère fluoré qui est lui-même sous la forme de poudre.

Si on souhaite conférer au revêtement une coloration, on peut ajouter en outre au matériau un pigment blanc ou coloré, par exemple TiO₂ ou un titanate.

Le matériau de l'invention peut notamment être mis sous la forme d'un ruban destiné à être enroulé sur la surface à marquer par laser, par exemple sur la surface d'un câble électrique.

Un tel ruban peut être obtenu notamment par le procédé dit d'extrusion lubrifiée qui consiste à mélanger la composition à base de poudre de polymère fluoré, de polyimide, et éventuellement de pigment, en mélange avec un lubrifiant (par exemple celui commercialisé par Exxon sous la dénomination Isopar), pour réaliser un mélange lubrifié qui est ensuite compacté et extrudé à travers une filière appropriée pour obtenir le matériau sous la forme souhaitée, par exemple un ruban qui est ensuite soumis à une opération de calandrage entre deux cylindres, éventuellement avec étirage, pour obtenir un ruban de faible épaisseur, et le lubrifiant est éliminé, par exemple par évaporation.

Le matériau de revêtement de l'invention peut également être réalisé sous la forme d'un vernis, en dispersion aqueuse de polymère fluoré chargé d'additifs, qui est appliqué par exemple par immersion, suivie de séchage, du produit que l'on souhaite revêtir.

Après application, le matériau de revêtement est soumis à un traitement thermique de cuisson à une température supérieure à la température de frittage.

On a constaté que l'incorporation de polyimides dans les polymères fluorés augmente le risque de propagation d'arcs électriques. Toutefois, il a été découvert que, dans les cas où le phénomène de propagation d'arcs électriques est à redouter, il est possible d'empêcher cette propagation en ajoutant au matériau de revêtement certains oxydes ou sels métalliques qui ont la propriété d'inhiber la propagation d'arcs électriques. Par exemple, on peut ajouter de 0,5 % à 3 % d'un tel agent inhibiteur, qui peut être choisi notamment parmi l'alumine, l'oxyde de zinc et le borate de zinc.

Ces oxydes ou sels métalliques sont ajoutés par exemple sous la forme de poudres ayant des dimensions de particules de 1 à 10 µm.

L'invention s'étend à tout produit manufacturé revêtu par un matériau de revêtement tel que défini ci-dessus, par exemple un câble électrique.

L'invention concerne également l'utilisation comme agent inhibiteur de la propagation d'arcs électriques dans des revêtements à base de polymère fluoré contenant comme additif au moins un polyimide tel que défini ci-dessus, d'une charge choisie parmi l'alumine, l'oxyde de zinc, le borate de zinc et leurs mélanges, en particulier à raison de 0,5 à 3 % en poids par rapport au poids dudit revêtement.

Les exemples suivants illustrent l'invention.

### Exemple 1

On a préparé une composition à base de PTFE cru contenant 1 % de polyimide P84.

On a préparé avec cette composition, par extrusion lubrifiée, un ruban ayant une épaisseur de 76 µm.

Le ruban obtenu a été utilisé pour le guipage d'un câble électrique revêtu d'une sous-couche de polyimide (commercialisé sous la dénomination Kapton par Du Pont de Nemours). Le revêtement de PTFE est fritté à une température de 380 °C.

On a réalisé des essais de marquage avec un laser UV (densité d'énergie 0,8 J/cm²).

On obtient un marquage présentant un contraste de 82 %.

### Exemple 2

On opère comme ci-dessus, en remplaçant le polymère P84 par le copolymère P84 HT.

### Exemple 3

On opère comme à l'exemple 1, mais on ajoute en outre à la composition de départ 1 % en poids d'alumine (référence BRH-15, fournisseur Alumines Durmax).

On peut remplacer l'alumine par l'oxyde de zinc ou le borate de zinc.

### Exemple 4

On opère comme à l'exemple 1, mais on ajoute en outre à la composition 0,5 % en poids de particules de TiO₂.

### Exemple 5

Des essais de comparaison entre des rubans contenant différentes charges ont été effectués pour évaluer leur performance en ce qui concerne la résistance à la propagation de l'arc électrique.

L'additif polyimide est le P84 HT.

Les rubans de compositions suivantes ont été utilisés :
a) ruban 100 % PTFE
b) ruban PTFE contenant 0,8 % de polyimide
c) ruban PTFE contenant 0,8 % de polyimide et 0,4 % d'alumine
d) ruban PTFE contenant 0,8 % de polyimide et 0,8 % d'alumine
e) ruban PTFE contenant 0,8 % de polyimide et 1,2 % de borate de zinc.

Des câbles de calibre 22 ont été revêtus par guipage avec les rubans ci-dessus pour le test (essai à sec) sur la résistance à l'amorçage et à la propagation d'arc électrique selon la norme européenne Pr NF EN 3475-604. L'évaluation du taux de perte sur les 18 éprouvettes (faisceaux de sept câbles) testées sous six intensités de courant électrique (trois par intensité) dans chaque type de ruban est donnée dans le tableau 1 ci-dessous :

**Tableau 1**

| Ruban | Perte% |
|---|---|
| (a) | 0 |
| (b) | 15 |
| (c) | 8 |
| (d) | 1 |
| (e) | 3 |

### Exemple 6

Des essais de marquage de divers polyimides ont été réalisés avec un laser excimère de longueur d'onde 308 nm, énergie 1 J/cm².

Les polyimides étudiés étaient les suivants :
- film de poly(4, 4'-oxydiphénylènepyromellitimide) commercialisé sous la dénomination Kapton par Du Pont de Nemours,
- polyimide Vespel, commercialisé par Du Pont de Nemours, ayant la même structure que le Kapton, mais sous forme de poudre.
- polyimide Apical, commercialisé par Kaneka.
   Le polyimide Apical a la même structure que le Kapton, la seule différence étant que le Kapton est durci chimiquement, tandis que l'Apical est durci thermiquement.
- polyimide Aurum, commercialisé par Mitsui Toatsu.
   La structure du polyimide Aurum, décrite à l'aide de la formule VII, correspondrait au cas où R est un radical phénylé tétravalent et R' est un groupement

   ―(m-C₆H₄)―O―(p-C₆H₄)₂―O―(m-C₆H₄)―.

   - polyétherimide Ultem (General Electric), dont la structure, décrite à l'aide de la formule VII, correspondrait au cas où R est un radical semblable à celui de la formule VIa ci-dessus, avec R₃ = R₄ = R'₄ = R₅ = H, et Z = -C(CH₃)₂-, mais dont les hétéroatomes -S- seraient remplacés par -O-, et R' est un groupe -m-C₆H₄-.

Les résultats sont résumés dans le tableau 2 suivant :

**Tableau 2**

| P**olyimide** | **Marquabilité** | **Contraste** |
|---|---|---|
| Kapton | non | - |
| Vespel | non | - |
| Apical | non | - |
| Aurum | non | - |
| Ultem | non | - |
| P84 | oui | élevé |
| P84 HT | oui | élevé |

Ces essais montrent que les polyimides et polyétherimides ne sont pas tous aptes au marquage par laser. Seuls les polyimides tels que définis dans la présente demande ont été trouvés aptes au marquage par laser.

## Revendications

1. Matériau de revêtement, sous forme de ruban ou de vernis, apte au marquage par laser, à base de polymère fluoré, contenant comme additif de 0,5 % à 5 % en poids d'au moins un polyimide comprenant des motifs répétitifs qui contiennent au moins un groupement Ar-X-Ar', dans lequel Ar et Ar' représentent indépendamment un groupe aryle monovalent ou divalent éventuellement substitué, et X représente un groupement -CO- ou -S-, ledit polyimide étant exempt d'hétéroatomes ou groupements hétéroatomiques autres que -S- et autres que les groupements imides.

2. Matériau selon la revendication 1, dans lequel au moins 50 %, et en particulier au moins 60 % des motifs dudit polyimide contiennent au moins un groupement Ar-X-Ar'.

3. Matériau selon la revendication 1 ou 2, présentant l'une au moins des caractéristiques suivantes :
- ledit groupement -CO- est présent dans un groupe divalent ou tétravalent de formule I:
Ar-CO-Ar' (I)
Ar et Ar' représentant chacun indépendamment un groupement aryle monovalent ou divalent, éventuellement substitué ;
- ledit groupement -CO- est présent dans un groupe aromatique divalent ou tétravalent de formule II ou III: 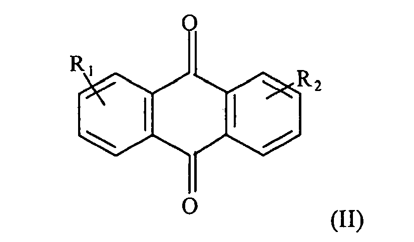 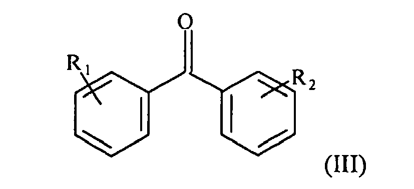 R₁ et R₂ représentant indépendamment H ou un ou plusieurs substituants.

4. Matériau selon l'une quelconque des revendications précédentes, présentant l'une au moins des caractéristiques suivantes :
- ledit groupement -S- est présent dans un groupe aromatique divalent ou tétravalent de formule IV: 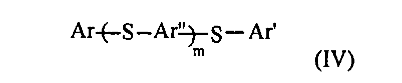 dans laquelle Ar et Ar' représentent chacun un groupement aryle monovalent ou divalent, Ar" est un groupement arylène, m est le nombre zéro ou un nombre entier égal à 1 ou 2, et les groupements Ar, Ar' et Ar" sont éventuellement substitués ;
- ledit groupement -S- est présent dans un groupe aromatique divalent
ou tétravalent de formule V : 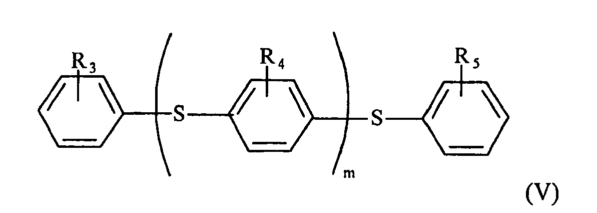 dans laquelle R₃, R₄ et R₅ représentent indépendamment H ou un ou plusieurs substituants, et m est un nombre égal à 0, 1 ou 2,
ou de formule VI : 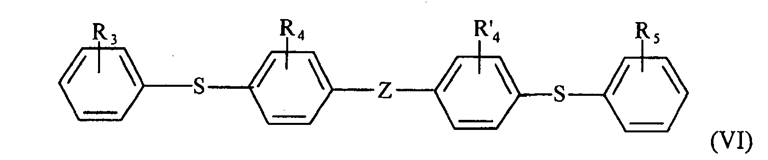 dans laquelle R₃, R₄ et R₅ sont définis comme ci-dessus, et R'₄ représente H ou un ou plusieurs substituants, et Z représente une liaison covalente ou un groupement -CH₂-, -CH(CH₃)- ou -C(CH₃)₂-.

5. Matériau de revêtement selon l'une des revendications précédentes, dans lequel le polyimide contient des motifs de formule VII : 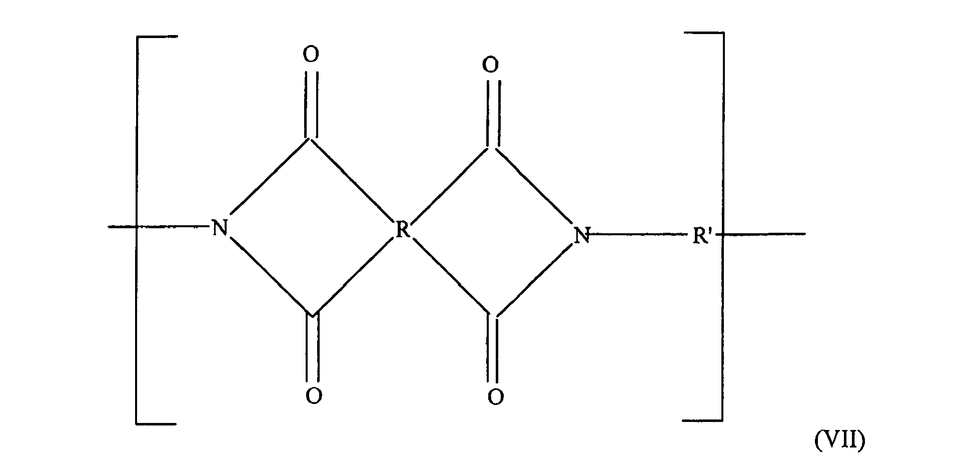 dans laquelle R représente un groupe aromatique tétravalent éventuellement substitué et R' est un groupe aromatique divalent éventuellement substitué, et dans laquelle l'un au moins des groupes R et R' contient au moins un groupement Ar-X-Ar' tel que défini dans l'une quelconque des revendications précédentes.

6. Matériau selon la revendication 5, dans lequel R représente au moins un des groupements tétravalents de formules IIa, IIIa, Va ou VIa: 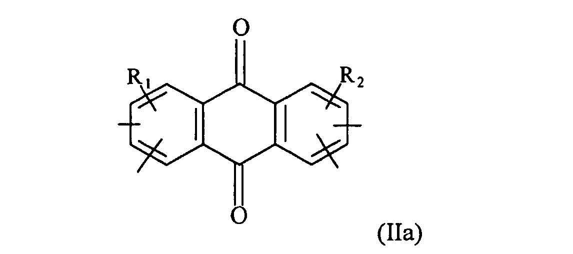 et : 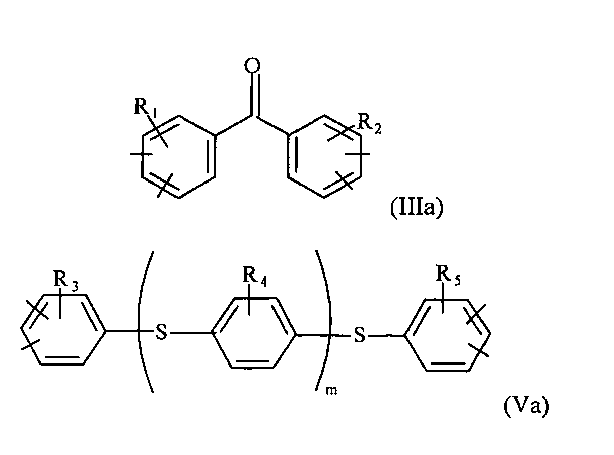 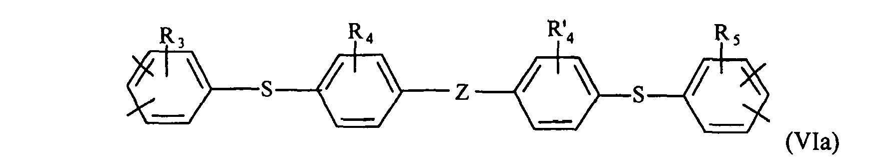 R₁, R₂, R₃, R₄, R₅ et R'₄ représentant indépendamment H ou un ou plusieurs substituants, Z représentant une liaison covalente ou un groupement -CH₂-, -CH(CH₃)₂- ou -C(CH₃)-, et les valences libres sont en position ortho l'une par rapport à l'autre.

7. Matériau selon l'une quelconque des revendications 5 et 6, dans lequel R' représente au moins un des groupements divalents de formule IIb, IIIb, Vb ou VIb : et : 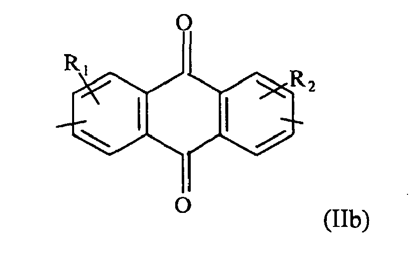 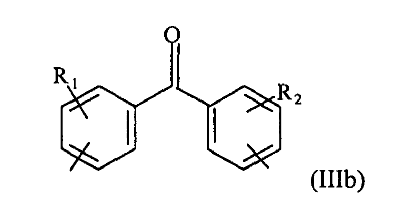 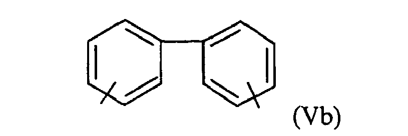 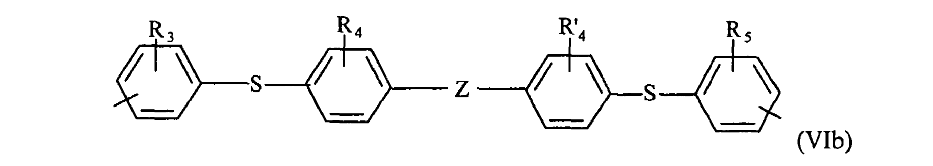 R₁, R₂, R₃, R₄, R₅ et R'₄ représentant chacun indépendamment H ou un ou plusieurs substituants, et Z représentant une liaison covalente ou un groupement -CH₂-, -CH(CH₃)-
ou -C(CH₃)₂-.

8. Matériau selon l'une quelconque des revendications 5 à 7, dans lequel soit les groupes R, soit les groupes R', contiennent des groupements Ar-X-Ar' tels que définis dans l'une quelconque des revendications 1 à 4, et les autres groupes (soit R', soit R, selon le cas), n'en contiennent pas.

9. Matériau selon la revendication 8, dans lequel lesdits autres groupes sont des groupes aromatiques divalents (cas de R') ou tétravalents (cas de R) contenant des groupements cycliques dérivés du benzène ou du naphtalène, éventuellement substitués, par des halogènes, des alkyles inférieurs et des halogénoalkyles inférieurs.

10. Matériau selon la revendication 9, dans lequel lesdits autres groupes ont l'une au moins des structures suivantes : 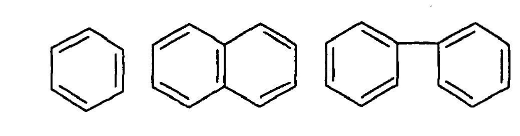 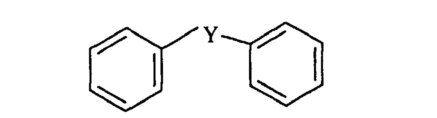 et dans lesquelles Y représente -CH₂-, -CH(CH₃)-, -C(CH₃)₂- et les cycles sont éventuellement substitués par des halogènes, des alkyles inférieurs ou des halogénoalkyles inférieurs.

11. Matériau selon l'une quelconque des revendications précédentes, contenant en outre de 0,5 % à 3 % d'un oxyde ou sel métallique inhibiteur de la propagation d'arc électrique.

12. Matériau selon la revendication 10, dans lequel l'inhibiteur de propagation d'arc électrique est choisi parmi l'alumine, l'oxyde de zinc et le borate de zinc.

13. Matériau selon l'une quelconque des revendications précédentes, présentant l'une au moins des caractéristiques suivantes :
- il contient en outre un pigment blanc ou coloré ;
- le polymère fluoré est le PTFE ;
- il se présente sous la forme d'un ruban.

14. Produit manufacturé revêtu par un matériau tel que défini dans l'une quelconque des revendications précédentes.

15. Utilisation, comme agent inhibiteur de la propagation d'arcs électriques dans des revêtements à base de polymère fluoré contenant comme additif au moins un polyimide tel que défini dans l'une quelconque des revendications 1 à 9, d'une charge choisie parmi l'alumine, l'oxyde de zinc, le borate de zinc et leurs mélanges.

16. Utilisation selon la revendication 15, dans laquelle ledit agent inhibiteur est présent à raison de 0,5 % à 3 % en poids, par rapport au poids dudit revêtement.

## Claims

1. Fluoropolymer-based coating material in tape or varnish form suitable for laser marking and containing as additive from 0.5% to 5% by weight of at least one polyimide comprising repeating units which include at least one group Ar-X-Ar', in which Ar and Ar' represent independently an optionally substituted monovalent or divalent aryl group and X represents a -CO- or -S- group, the said polyimide being free from heteroatoms or heteratomic groups other than -S- and other than the imide groups.

2. Material according to Claim 1, wherein at least 50%, and in particular at least 60% of the units of the said polyimide include at least one group Ar-X-Ar'.

3. Material according to Claim I or 2, having at least one of the following features:
- the said -CO- group is present in a divalent or tetravalent group of formula I
Ar-CO-Ar' (I)
where Ar and Ar' represent each independently an optionally substituted monovalent or divalent aryl group;
- the said -CO- group is present in a divalent or tetravalent aromatic group of formula II or III 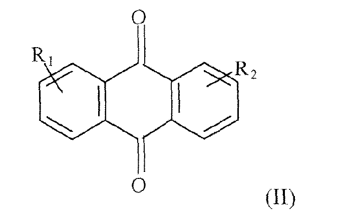 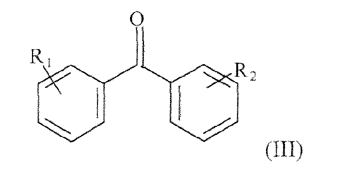
where R₁ and R₂ represent independently H or one or more substituents.

4. Material according to any one of the preceding claims, having at least one of the following features:
- the said -S- group is present in a divalent or tetravalent aromatic group of formula IV 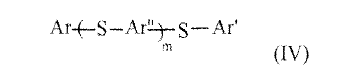 in which Ar and Ar' each represent a monovalent or divalent aryl group, Ar" is an arylene group, m is the number zero or an integer 1 or 2, and the groups Ar, Ar' and Ar" are optionally substituted;
- the said -S- group is present in a divalent or tetravalent aromatic group of the formula V 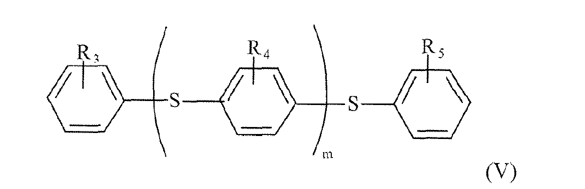
in which R₃, R₄ and R₅ represent independently H or one or more substituents and m is a number 0, 1 or 2,
or of formula VI 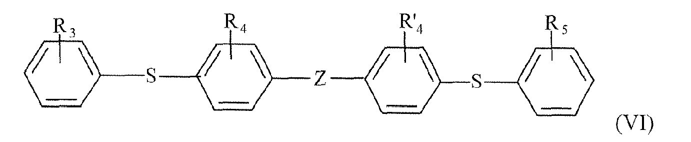 in which R₃, R₄ and R₅ are defined as above, and R'₄ represents H or one or more substituents, and Z represents a covalent bond or a -CH₂-, -CH(CH₃)- or -C(CH₃)₂- group.

5. Coating material according to one of the preceding claims, wherein the polyimide includes units of formula VII 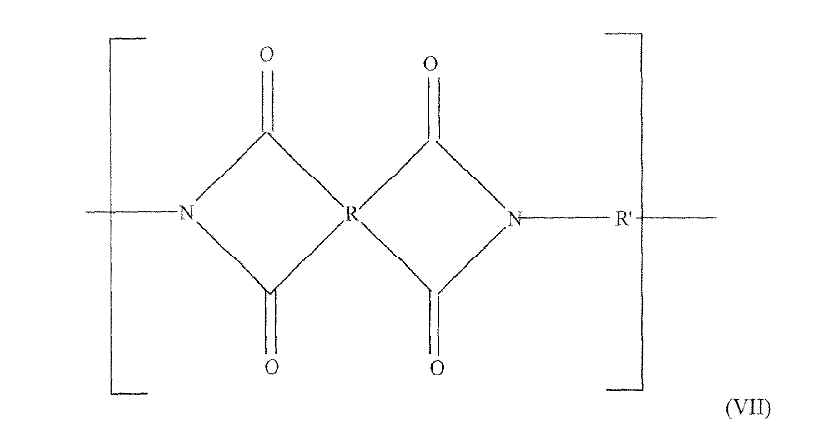 in which R represents an optionally substituted tetravalent aromatic group and R' is an optionally substituted divalent aromatic group, and in which at least one of the groups R and R' includes at least one group Ar-X-Ar' as defined in any one of the preceding claims.

6. Material according to Claim 5, wherein R represents at least one of the tetravalent groups of formula IIa, IIIa, Va or VIa 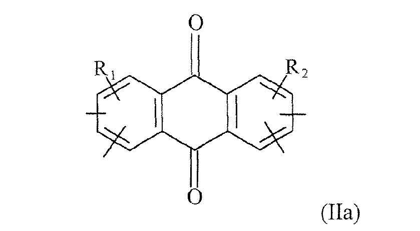 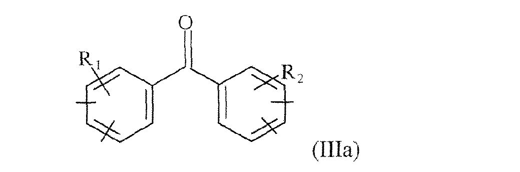 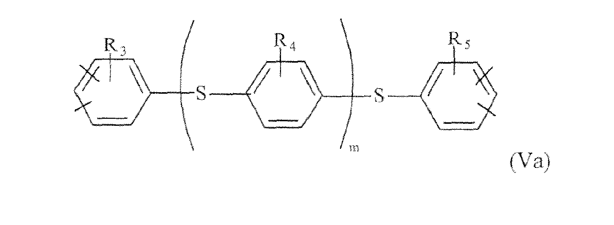 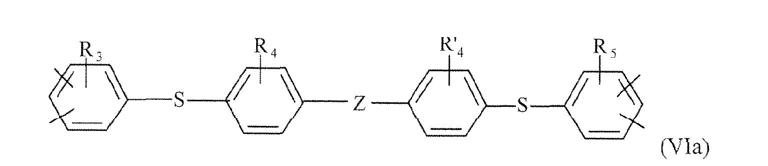 where R₁, R₂, R₃, R₄, R₅ and R'₄ represent independently H or one or more substituents, Z represents a covalent bond or a -CH₂-, -CH(CH₃)- or -C(CH₃)₂- group, and the free valencies are positioned ortho with respect to one another.

7. Material according to either of Claims 5 and 6, wherein R' represents at least one of the divalent groups of formula IIb, IIIb, Vb or VIb 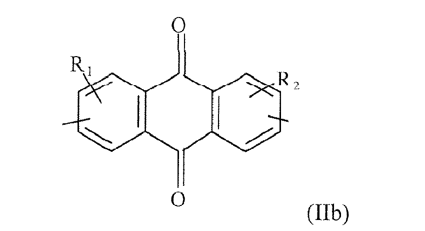 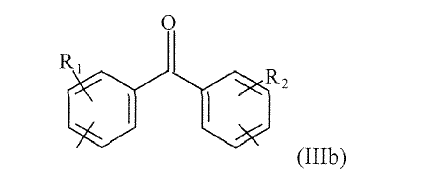 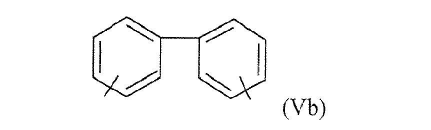 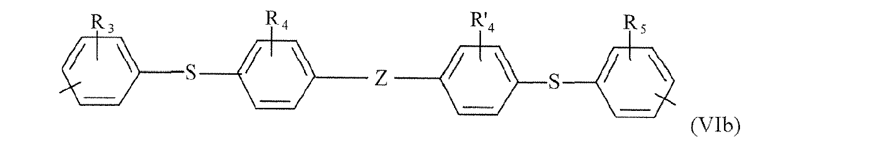 where R₁, R₂, R₃, R₄, R₅ and R'₄ represent each independently H or one or more substituents, and Z represents a covalent bond or a -CH₂-, -CH(CH₃)- or -C(CH₃)₂- group.

8. Material according to any one of Claims 5 to 7, wherein either the groups R, or the groups R' include groups Ar-X-Ar' as defined in any one of Claims 1 to 4, and the other groups (either R' or R, as appropriate) do not contain such groups.

9. material according to Claim 8, wherein the said other groups are divalent (in the case of R') or tetravalent (in the case of R) aromatic groups containing cyclic groups derived from benzene or from naphthalene, which are optionally substituted by halogens, lower alkyls and lower haloalkyls.

10. Material according to Claim 9, wherein the said other groups have at least one of the following structures: 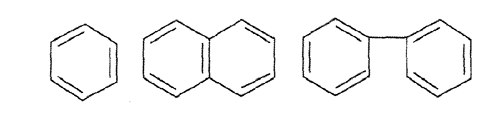 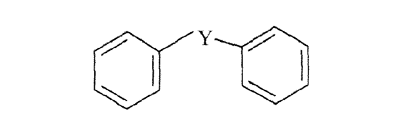 and in which Y represents -CH₂-, -CH(CH₃)- or -C(CH₃)₂- and the rings are optionally substituted by halogens, lower alkyls or lower haloalkyls.

11. Material according to any one of the preceding claims, further containing from 0.5% to 3% of a metal salt or oxide which inhibits electrical arc tracking.

12. Material according to Claim 10, wherein the electrical arc tracking inhibitor is selected from alumina, zinc oxide and zinc borate.

13. Material according to any one of the preceding claims, having at least one of the following features:
- it further comprises a white or coloured pigment;
- the fluoropolymer is PTFE;
- it is in the form of a tape.

14. Manufactured product coated with a material as defined in any one of the preceding claims.

15. Use as electrical arc tracking inhibitor in fluoropolymer-based coatings comprising as additive at least one polyimide as defined in any one of Claims 1 to 9 of a filler selected from aluminium, zinc oxide, zinc borate and mixtures thereof.

16. Use according to Claim 15, wherein the said inhibitor is present at from 0.5% to 3% by weight, relative to the weight of the said coating.

## Patentansprüche

1. Überzugsmaterial in Form eines Bands oder Lacks, das zum Laser-Markieren geeignet ist, auf Fluorpolymerbasis, das als Additiv 0,5 bis 5 Gew.% von zumindest einem Polyimid enthält, das repetitive Motive aufweist, die mindestens eine Gruppierung Ar-X-Ar' enthalten, worin Ar und Ar' unabhängig voneinander für eine einwertige oder zweiwertige, gegebenenfalls substituierte Arylgruppe stehen und X für eine Gruppierung -CO- oder -S- steht, wobei das Polyimid abgesehen von -S- und abgesehen von den Imidgruppierungen frei von Heteroatomen oder Heteroatomgruppierungen ist.

2. Material nach Anspruch 1, wobei mindestens 50 % und insbesondere mindestens 60 % der Motive des Polyimids mindestens eine Gruppierung Ar-X-Ar' enthalten.

3. Material nach Anspruch 1 oder 2, das mindestens eines der folgenden Merkmale aufweist:
- die Gruppierung -CO- ist in einer zwei- oder vierwertigen Gruppe der Formel I enthalten:
Ar-CO-Ar' (I)
worin Ar und Ar' jeweils unabhängig voneinander für eine einwertige oder zweiwertige, gegebenenfalls substituierte Arylgruppe stehen;
- die Gruppe -CO- ist in einer zwei- oder vierwertigen aromatischen Gruppe der Formel II oder III enthalten: 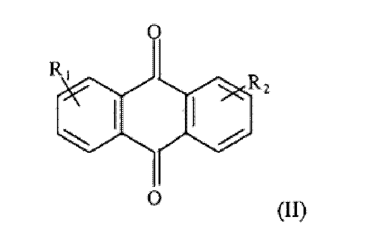 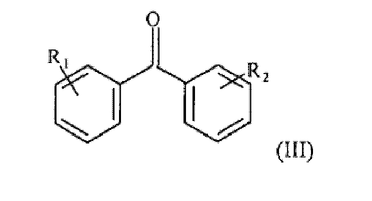
worin R₁ und R₂ unabhängig voneinander für H oder einen oder mehrere Substituenten stehen.

4. Material nach einem der vorangegangenen Ansprüche, das mindestens eines der folgenden Merkmale aufweist:
- die Gruppierung -S- ist in einer zwei- oder vierwertigen aromatischen Gruppe der Formel IV enthalten: 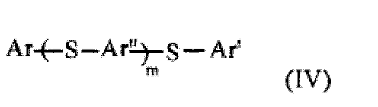 worin Ar und Ar' jeweils für eine einwertige oder zweiwertige Arylgruppierung stehen, Ar" eine Arylengruppierung ist, m die Zahl Null oder eine ganze Zahl gleich 1 oder 2 ist und die Gruppierungen Ar, Ar' und Ar" gegebenenfalls substituiert sind;
- die Gruppe -S- ist in einer zwei- oder vierwertigen aromatischen Gruppe der Formel V: 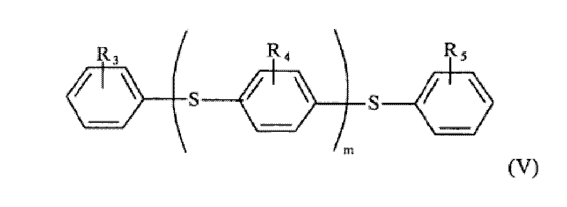
worin R₃, R₄ und R₅ unabhängig voneinander für H oder einen oder mehrere Substituenten stehen und m eine Zahl gleich 0, 1 oder 2 ist,
oder der Formel VI enthalten: 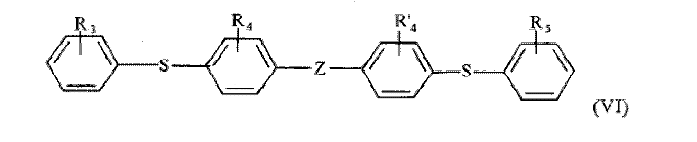 worin R₃, R₄ und R₅ so wie oben definiert sind, R'₄ für H oder einen oder mehrere Substituenten steht und Z für eine kovalente Bindung oder eine Gruppierung -CH₂-, -CH(CH₃)- oder -C(CH₃)₂- steht.

5. Überzugsmaterial nach einem der vorangegangenen Ansprüche, wobei das Polyimid Motive der Formel VII enthält: 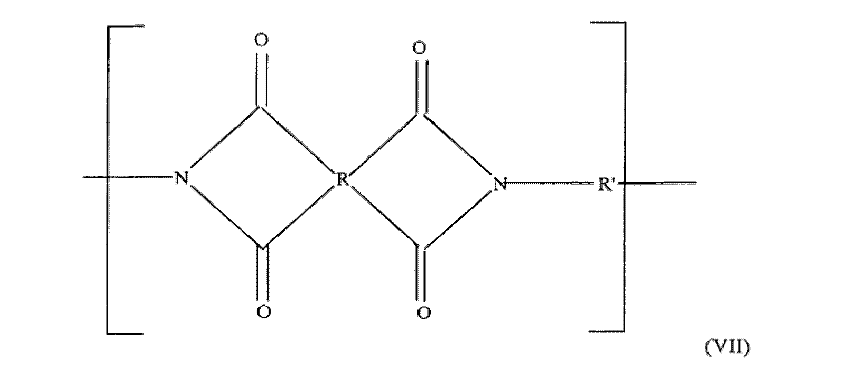 worin R für eine vierwertige, gegebenenfalls substituierte aromatische Gruppe steht und R' eine zweiwertige, gegebenenfalls substituierte aromatische Gruppe ist, und wobei mindestens eine der Gruppen R und R' mindestens eine Gruppierung Ar-X-Ar' enthält, so wie sie in einem der vorangegangenen Ansprüche definiert ist.

6. Material nach Anspruch 5, wobei R für mindestens eine der vierwertigen Gruppierungen der Formeln IIa, IIIa, Va oder VIa steht: 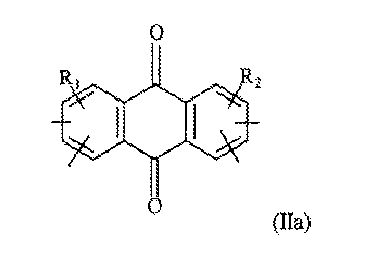 und: 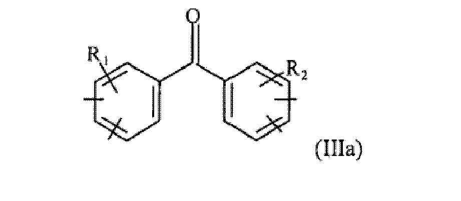 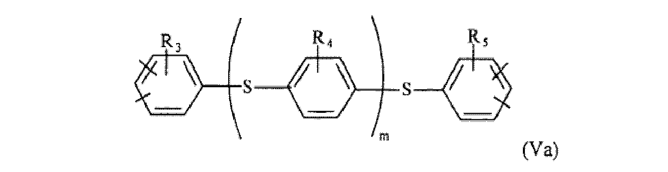 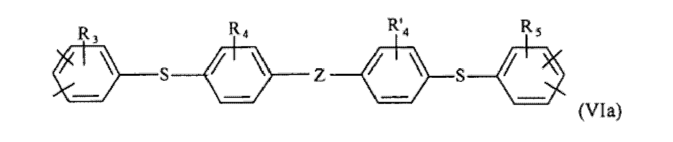 worin R₁, R₂, R₃, R₄, R₅ und R'₄ unabhängig voneinander für H oder einen oder mehrere Substituenten stehen, Z für eine kovalente Bindung oder eine Gruppierung -CH₂-, -CH(CH₃)₂- oder -C(CH₃)- steht und die freien Valenzen in Bezug aufeinander in ortho-Stellung sind.

7. Material nach einem der Ansprüche 5 und 6, wobei R' für mindestens eine der zweiwertigen Gruppierungen der Formeln IIb, IIIb, Vb oder VIb steht: 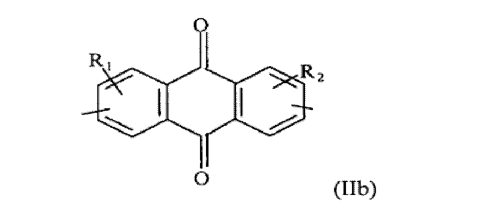 und: 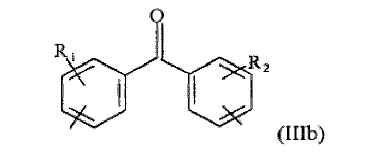 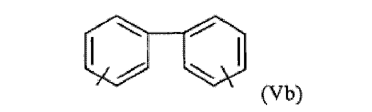 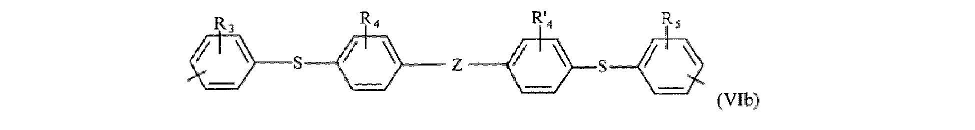 worin R₁, R₂, R₃, R₄, R₅ und R'₄ jeweils unabhängig voneinander für H oder einen oder mehrere Substituenten stehen und Z für eine kovalente Bindung oder eine Gruppierung -CH₂-, -CH(CH₃)- oder -C(CH₃)₂-steht.

8. Material nach einem der Ansprüche 5 bis 7, wobei entweder die Gruppen R oder die Gruppen R' Gruppierungen Ar-X-Ar' enthalten, so wie sie in einem der Ansprüche 1 bis 4 definiert sind, und die anderen Gruppen (entweder R' oder R, je nach Fall) keine enthalten.

9. Material nach Anspruch 8, wobei die anderen Gruppen zweiwertige (im Fall von R') oder vierwertige (im Fall von R) aromatische Gruppen sind, die zyklische Gruppierungen, die Derivate von Benzol oder Naphthalin sind, enthalten, die gegebenenfalls mit Halogenen, Niederalkylen oder Niederhalogenalkylen substituiert sind.

10. Material nach Anspruch 9, wobei die anderen Gruppen mindestens eine der folgenden Strukturen aufweisen: 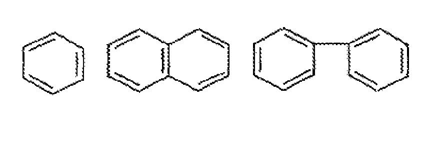 und 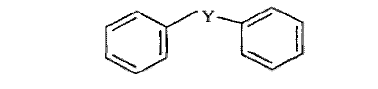 worin Y für -CH₂-, -CH(CH₃)- oder -C(CH₃)₂- steht und die Ringe gegebenenfalls mit Halogenen, Niederalkylen oder Niederhalogenalkylen substituiert sind.

11. Material nach einem der vorangegangenen Ansprüche, das ferner 0,5 % bis 3 % eines Oxids oder Metallsalzes, das die Ausbreitung von Lichtbögen hemmt, enthält.

12. Material nach Anspruch 10, wobei der Hemmer der Ausbreitung von Lichtbögen aus Aluminiumoxid, Zinkoxid und Zinkborat ausgewählt ist.

13. Material nach einem der vorangegangenen Ansprüche, das mindestens eines der folgenden Merkmale aufweist:
- es enthält ferner ein Weiß- oder Farbpigment;
- das Fluorpolymer ist PTFE;
- es liegt in Form eines Bands vor.

14. Fertigerzeugnis, das mit einem Material überzogen ist, so wie es in einem der vorangegangenen Ansprüche definiert wurde.

15. Verwendung eines Füllmittels, das aus Aluminiumoxid, Zinkoxid, Zinkborat und Gemischen davon ausgewählt ist, als Mittel zur Hemmung der Ausbreitung von Lichtbögen in Überzügen auf Fluorpolymerbasis, die als Additiv mindestens ein Polyimid, so wie es in einem der Ansprüche 1 bis 9 definiert wurde, enthalten.

16. Verwendung nach Anspruch 15, wobei das Mittel zur Hemmung mit 0,5 bis 3 Gew.% in Bezug auf das Gewicht des Überzugs gegenwärtig ist.
